# EUROPEAN PATENT SPECIFICATION

(11) **EP 3 393 760 B1**
(45) Date of publication and mention of the grant of the patent: **15.07.2020**
(21) Application number: 16822719.7
(22) Date of filing: 21.12.2016
(51) Int. Cl.: B29C 64/153, B33Y 10/00, B33Y 30/00, B33Y 50/00, B22F 3/105

(54) **ADDITIVE MANUFACTURING APPARATUS AND METHODS**
VORRICHTUNG UND VERFAHREN ZUR GENERATIVEN FERTIGUNG
APPAREIL ET PROCÉDÉS DE FABRICATION ADDITIVE

(30) Priority: 22.12.2015 IN 4222DE2015
(43) Date of publication of application: 31.10.2018
(73) Proprietor: Renishaw PLC, Wotton-under-Edge, Gloucestershire GL12 8JR (GB)
(72) Inventor: REVANUR, Ramkumar, Stone Staffordshire ST15 0SH (GB); BROWN, Ceri, Wotton-under-Edge Gloucestershire GL12 8JR (GB); MCCLELLAND, Michael Joseph, Stone Staffordshire ST15 0SH (GB); KIRBY, Mark, Samuel, Mississauga Ontario L5L 1C7 (CA)
(74) Representative: Matthews, Paul
(86) International application number: PCT/GB2016/054011
(87) International publication number: WO 2017/109483

(56) References cited:
- EP-A1- 2 022 622
- WO-A1-2012/146746
- US-A1- 2005 278 933

## Description

### Field of Invention

This invention concerns additive manufacturing apparatus and methods in which layers of material are solidified in a layer-by-layer manner to form an object. The invention has particular, but not exclusive application, to powder bed fusion, such as selective laser melting (SLM) and selective laser sintering (SLS) apparatus.

### Background

Powder bed fusion apparatus produce objects through layer-by-layer solidification of a material, such as a metal powder material, using a high energy beam, such as an electron or laser beam. A powder layer is formed across a powder bed in a build chamber by depositing a heap of powder adjacent to the powder bed and spreading the heap of powder with a wiper across (from one side to another side of) the powder bed to form the layer. A high energy beam is then scanned across areas of the powder layer that correspond to a cross-section of the object being constructed. The high energy beam melts or sinters the powder to form a solidified layer. After selective solidification of a layer, the powder bed is lowered by a thickness of the newly solidified layer and a further layer of powder is spread over the surface and solidified, as required. An example of such a device is disclosed in US6042774.

Typically, the high energy beam is scanned across the powder along a scan path. An arrangement of the scan paths will be defined by a scan strategy. US5155324 describes a scan strategy comprising scanning an outline (border) of a part cross-section followed by scanning an interior (core) of the part cross-section.

It is known to use a continuous mode of laser operation, in which the laser is maintained on whilst the mirrors move to direct the laser spot along the scan path, or a pulsed mode of laser operation, in which the laser is pulsed on and off as the mirrors direct the laser spot to different locations along the scan path in order to form a continuous solidified line of material.

The strategy used for scanning a part can affect the thermal loads generated during the build and accuracy of the resultant build. Shrinkage of the part as it cools is a major cause of distortion in powder bed fusion. This is especially prevalent when separate islands of a preceding layer are joined together later in the build through the solidification of an area spanning the islands (referred to hereinafter as "a bridging area"). Shrinkage of the bridging area can distort the position of the islands and/or result in a witness line visible across the bridging area.

US2005/0278933 A1 discloses adding a heat sink, or a plurality of heat sinks to various positions of the bed such that different tool features may be cooled subsequent to sintering on the first section or second section, thereby avoiding warping that is otherwise inherent in the sintering process. The method may also comprise predetermining an orientation of the first section of the tool within the part chamber to minimize warping of the first tool feature during sintering.

WO2012/146746 A1 discloses a member of absorbing deformations arranged between the object and the plate. The member may be a plurality of flat strips between the object and the plate.

EP 2 022 622 A1 discloses a method of forming a component from solid freeform fabrication comprising the step of building an integral support around the component during manufacture thereof. The stiffness the support provides to the component is selected to minimise deformation of the component either during the manufacture of the component or during a subsequent heat treatment process.

### Summary of Invention

According to a first aspect of the invention there is provided a method of building a workpiece in an additive manufacturing process, in which the workpiece is built through layer-by-layer solidification of material, the method comprising, for a bridging layer in which an area to be solidified bridges material solidified as separate islands in an immediately preceding layer, first, solidifying separated portions of the area, each separated portion connected with a different one of the islands of the preceding layer, and then solidifying material between the separated portions to join the separated portions together.

In this way, the separated portions are allowed to independently shrink, such as during cooling, before the separated regions are joined together. In this way, distortion of the islands and/or solidified material between the separated portions (a joining region), and consequential witness lines, are avoided.

The material between the separated portions that is solidified to join the separated portions together may be located above unsolidified material of the immediately preceding layer. To avoid distortion of the separated portions during shrinkage, edges of the separated portions must be free to move. For this to be the case, the joining region should be located above unsolidified material of the immediately preceding layer.

The method may comprise delaying joining of the separated portions to allow time for the solidified separated portions to shrink. The delay may be by a predetermined time. The predetermined time may be determined based upon a geometry of the area to be solidified. The predetermined time may be determined based upon a cross-sectional area of one or each of the separated portions to be joined. Calculating the predetermined time from the cross-sectional area allows one to determine a delay before joining the separated portions based upon an expected shrinkage of the separated portions (as shrinkage is proportional to cross-sectional area). The predetermined time may be based upon the cross-sectional area of the separated portion having the largest cross-sectional area.

In addition, the predetermined time may be based upon a type of material being solidified. The method may comprise identifying a time per unit area for a type of material being solidified and determine the predetermined time from the identified time per unit area and the cross-section of the relevant separated portion(s).

A joining region formed by solidifying material between the separated portions may have a mid-line that is equidistant from the islands of the immediately preceding layer. The width of the joining region either side of the mid-line may be constant (before shrinkage of the separated portions). A width of a joining region between each separated portion may be of the order of ones or tens of spot widths (1/e²) of the energy beam. Preferably, the width of the joining region is less than 10 spot widths.

The separated portions may be substantially larger in cross-sectional area than the joining region, for example at least 10x or 100x larger than the joining region. The separated portions may be joined only after substantial completion of an island of the bridging layer that includes the separated portions.

The area to be solidified may comprise three or more adjacent separated portions, the method comprising joining the adjacent separated portions having the smallest cross-sectional first before joining the separated portion(s) having larger cross-sectional areas.

A scanning strategy used for solidifying the material between the separated portions may be the same or different to a scanning strategy used to solidify the separated portions. For example, if a meander scanning strategy is used to solidify the separated portions, a corresponding meander scanning strategy may be used to solidify the joining region. If a chequerboard or stripe scanning strategy is used to solidify the separated portions, a different scanning strategy, such as a meander scanning strategy, may be used to solidify the joining region. Locations scanned by the energy beam to solidify material of the joining region may overlap with locations scanned by the energy beam to solidify the separated portions to be joined in order to ensure complete melting of the material in between the separated portions. In particular, after shrinkage of the separated portions, a width of the joining region may change requiring rescanning of a previously scanned location to ensure the separated portions are joined.

The method may comprise solidifying one or more consecutive layers immediately following the bridging layer by solidifying an area that bridges material solidified as separate islands in the layer immediately preceding the bridging layer by, first, solidifying separated portions of the area, each separated portion formed above a different one of the islands of the preceding layer, and then solidifying material between the separated portions to join the separated portions together. A melt pool generated in a selective (laser or electron) beam melting process typically has a depth greater than a single layer. There may be advantages in extending such a scanning sequence to one or more consecutive layers immediately following the bridging layer to take account of the fact that the solidified material bridging the islands will be re-melted during the formation of these later layers.

The additive manufacturing process may comprise forming successive layers of flowable material onto a build platform and scanning the energy beam across selected areas of each layer to solidify the material in the selected areas. The additive manufacturing process may comprise powder bed fusion.

According to a second aspect of the invention there is provided additive manufacturing apparatus for building a workpiece through layer-by-layer solidification of material, the apparatus comprising a radiation source for generating an energy beam for solidifying selected areas of material layers, and a controller for controlling the radiation source such that, for a bridging layer in which an area to be solidified bridges material solidified as separate islands in an immediately preceding layer, the radiation source, first, solidifies separated portions of the area, each separated portion connected with a different one of the islands of the preceding layer, and then solidifies material between the separated portions to join the separated portions together.

### Description of the Drawings

**Figure 1** is a schematic of a selective laser solidification apparatus according to an embodiment of the invention;
**Figures 2** is a schematic diagram of a prior art method of forming an area bridging islands of material solidified in an immediately preceding layer;
**Figure 3a** is a schematic diagram of a first step in the formation of an area bridging islands of material solidified in an immediately preceding layer in accordance with an embodiment of the invention;
**Figure 3b** is a schematic diagram of a second step in the formation of an area bridging islands of material solidified in an immediately preceding layer in accordance with an embodiment of the invention;
**Figure 4** is illustrates a method according to one embodiment of the invention for identifying areas to be solidified using the method described with reference to Figures 3a and 3b; and
**Figure 5** illustrates various scanning parameters used to define a scan of a laser beam in a selective laser solidification process.

### Description of Embodiments

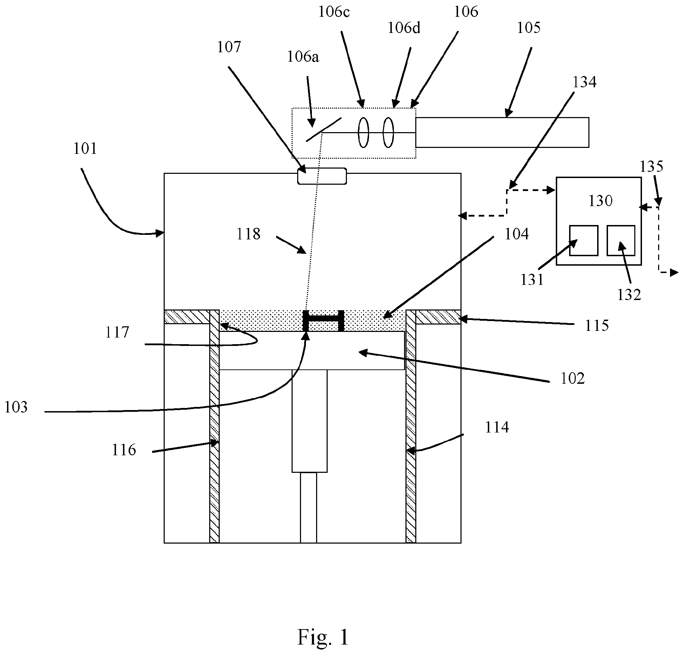

Referring to Figure 1, a powder bed fusion apparatus according to an embodiment of the invention comprises a main chamber 101 having therein partitions 115, 116 that define a build chamber 117. A build platform 102 is provided for supporting an object 103 built by selective laser melting powder 104. The platform 102 can be lowered within the build chamber 117 as successive layers of the object 103 are formed. A build volume available is defined by the extent to which the build platform 102 can be lowered into the build chamber 117.

Layers of powder 104 are formed as the object 103 is built by dispensing apparatus and an elongate wiper (not shown). For example, the dispensing apparatus may be apparatus as described in WO2010/007396.

A laser module 105 generates a laser for melting the powder 104, the laser directed as required by optical scanner 106 under the control of a computer 130. The laser enters the chamber 101 via a window 107.

The optical scanner 106 comprises steering optics, in this embodiment, two movable mirrors 106a for directing the laser beam to the desired location on the powder bed 104 and focussing optics, in this embodiment a pair of movable lenses 106c, 106d, for adjusting a focal length of the laser beam. Motors (not shown) drive movement of the mirrors 106a and lenses 106c, 106d, the motors controlled by computer 130.

Computer 130 comprises a processor unit 131, memory 132 a data connection 134 to modules of the laser melting unit, such as optical module 106 and laser module 105, and an external data connection 135. Stored on memory 132 is a computer program that instructs the processing unit to build a part in accordance with scanning instructions also stored in memory 132. The scanning instructions may be determined by computer 130 or on a separate computer and received via external connection 135. The scanning instructions describe scan paths for the laser beam to take in solidifying areas of powder in each powder layer. To build a part, the computer 130 controls the scanner 106 to direct the laser beam in accordance with the scan paths defined in the scanning instructions.

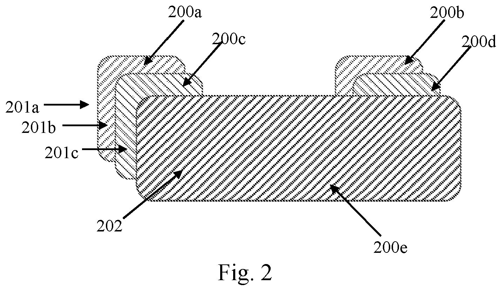

Referring to Figure 2, scan paths 202 for solidifying areas 200a to 200e of three consecutive layers 201a to 201c in a build are shown. Layers 201a and 201b comprise separate islands 200a, 200b and 200c, 200d, respectively, of material to be solidified whereas layer 201c (a so called "bridging layer") comprises an area 200e to be solidified that bridges material solidified as separate islands 200c, 200d in the immediately preceding layer 201b.

In the embodiment of the prior art shown, the scan paths 202 for the laser beam to follow in solidifying the areas 200a to 200e is a meander scanning strategy (raster scan). However, it will be understood that other scanning strategies can be used such as stripe or chequerboard scanning strategies. The scan is progressed from one side of the areas 200a to 200e to another side.

It has been found that the formation of the area 200e that bridges islands 200c, 200d in the immediately preceding layer 201b results in distortion of underlying areas 200a, to 3300d and the formation of a witness line in area 200e.

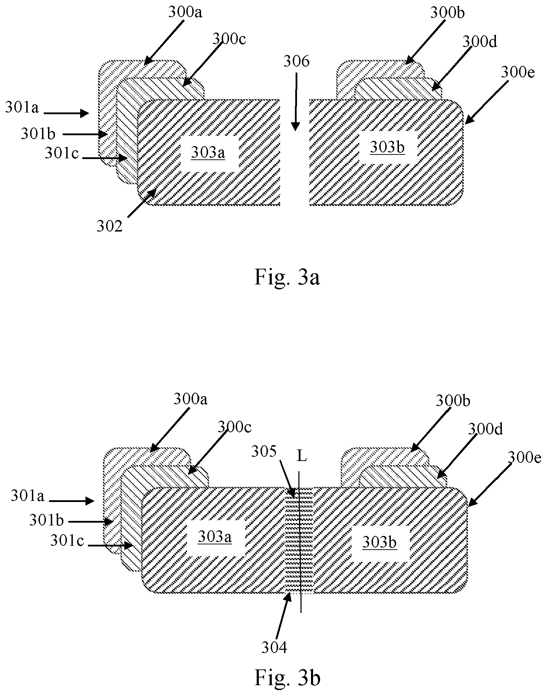

A method of forming an area 300e that bridges material solidified as separate islands 300c, 300d in the immediately preceding layer 301b will now be described with reference to Figures 3a and 3b. The same reference numerals but in the series 300 are used to refer to features of this embodiment that are the same or similar to features described with reference to Figure 2. In this embodiment of the invention, the area 300e is divided into separated portions 303a, 303b, one for each island 303c, 303d present in the immediately preceding layer 301b. The separated portions 303a, 303b are separated by a joining region 304 located above powder of the preceding layer 301b.

In a first step, as shown in Figure 3a, the separated portions 303a, 303b are formed using a meander scanning strategy. However, it will be understood that other scanning strategies, such a stripe and chequerboard scanning strategies may be used. Separated portions 303a, 303b are separated by a gap 306 of powder, which is later to be formed into the joining region 304. The powder in gap 306 remains unsolidified whilst the separated portions 303a, 303b are allowed to shrink as they cool. A width of the gap 306 is typically 1 to 10 laser spot diameters.

After a predetermined length of time, the powder in the gap 306 is solidified to form a joining region 304 joining the separated portions 303a, 303b together. The scan paths 305 for forming the joining region 304 may overlap with the scan paths 302 for solidifying the separated portions 303a, 303b to take into account shrinkage of the separated portions 303a, 303b and/or to adequately knit adjoining regions 303a, 303b, 304 together. The predetermined length of time (delay time) is calculated from the cross-sectional area of the largest separated potion 303a, 303b and a value for delay time per cross-sectional area for the material being solidified. The delay time may be included in the scanning instructions or may be determined by computer 130 from values of delay time per cross-sectional area for different materials stored in memory 132.

The scan paths used to solidify the joining region 304 may simply be an extension of the scanning pattern used to solidify the separated portions 303a, 303b or, as shown in Figure 3b, a different scanning pattern.

In this embodiment, areas to be solidified in consecutive layers (which are themselves not bridging layers) after the bridging layer 303e are scanned as they would have been scanned in the prior art. However, in another embodiment, the scanning patterns for a set number of consecutive layers above the bridging layer 303e are also modified to take into account the fact that spanning sections, such as the joining region 304, of bridging layer 303e are re-melted during the solidification of areas in these consecutive layers. The set number of layers may be based upon the expected depth of the melt pool generated by the laser beam.

It is believed that allowing the separated portions 303a, 303b to shrink before joining the separated portions 303a, 303b together to complete solidification of area 300e avoids distortions in the area 300e that occur in the prior art method.

The scan paths to implement this method are typically, but not essentially, determined in advance, for example, by additive build software. The additive build software receives geometric data defining surface geometry of a workpiece, for example in the form of an STL file. From the geometric data, the additive build software determines slices of the workpiece to be built as layers in the additive manufacturing process. Scan paths are then determined for each slice.

In accordance with the invention, the build software identifies bridging layers comprising at least one area that bridges islands of an immediately preceding layer. The build software divides the area of the bridging layer 303e into separated portions 303a, 303b and one or more joining regions 304. The location of the joining region 304 (and therefore, the shape of the separated portions 303a, 303b) is determined by ensuring that a mid-line 305 of the joining region 304 is equidistant from the islands 303c, 303d of the preceding layer 301b, the joining region 304 having a preset width, such as the width of a few laser spot diameters.

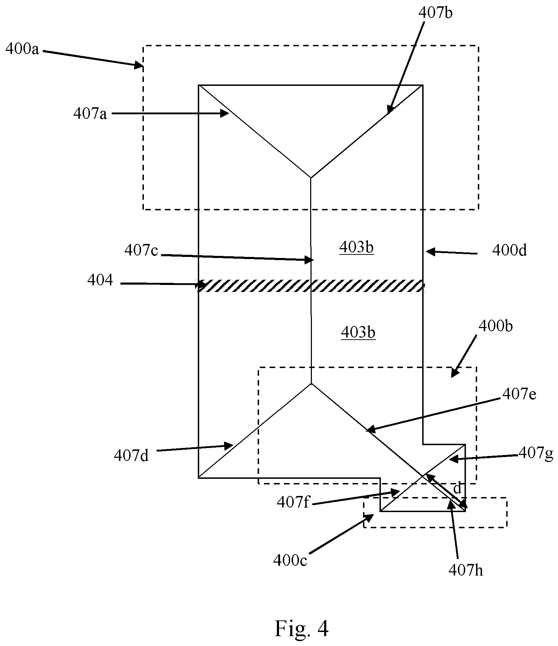

Referring to Figure 4, bridging areas to be formed using the method as described above are identified by determining a medial axis 407a to 407h of the bridging area 400d and identifying each branch (edge) 407c, 407d, 407f and 407h of the medial axis that is unsupported along at least a portion of its length by islands 400a, 400b, 400c of the preceding layer. First, branches 407d that end in an open node (a vertex with a single edge) 408d unsupported by the islands 400a, 400b, 400c of the preceding layer are removed from consideration. For each remaining branch 407c, 407f, 407h, a distance between the nodes of the branch 407c, 407f, 407h is determined. If the distance, d, is below a predetermined distance, such as for branches 407f and 407h then the branch 407f, 407h is eliminated from further consideration.

If the distance is above the predetermined distance, such as for branch 407c, then a joining region 404 is identified at a position along the branch that is located above unsolidified powder of the preceding layer. A midline of the joining region 404 is equidistant from the islands 400a, 400b that support the nodes of the branch 407c. In an alternative embodiment, the cross-sectional areas of the separated portions 403a, 403b are taken into account when determining a location of the joining region 404. For example, the joining region 404 may be moved closer to one of the islands in order to more closely match the cross-sectional areas of the two separated portions 403a, 403b to minimise delays in solidifying the joining region 404. A length of the medial axis that is within the separated areas 303a, 303b may be used as a proxy for the cross-sectional area of the separated portions 303a, 303b such that a position of the joining region 404 is based upon a total length of the portion of the medial axis in each separated portion. Other factors that may be taken into account are a volume of material of the islands 400am 400b and/or a thermal conductivity of the material.

Scan paths are then generated for each separated portion 303a, 303b, 403a, 403b and the joining region 304, 404. The scan paths of the joining region 304. 404 are generated so as to partially overlap with the scan paths of the separated portions 303a, 303b, 403a, 403b to take account of shrinkage of the separated portions 303a, 303b, 403a, 403b that occurs between solidifying the separated portions 303a, 303b, 403a, 403b and the joining region 304, 404.

In an alternative embodiment, the scan paths are generated before the area 300e, 400d of the bridging layer and the scan paths are divided based upon the determined separated areas 303a, 303b, 403a, 403b and joining region 304, 404.

In yet another embodiment, the shape of the joining region 304, 404 is determined based upon a determined scan path pattern for the area and/or separated portions 303a, 303b, 403a, 403b. For example, the joining region 304, 404 may be determined such that the edges of the separated portions 303a, 303b, 403a, 403b adjacent the joining portion 304, 404 conform with hatch lines of scan patterns used to form the separated portions 303a, 303b, 403a, 403b. For example, a shape of the joining region 304, 404 may be determined such that complete squares of a chequerboard scanning pattern or complete hatch lines of a stripe of a stripe scanning pattern can be formed at the required angle at the boundary of the separated portion 303a, 303b, 403a, 403b and the joining region 304, 404 (i.e. the joining region 304, 404 does not bisect a hatch line of a square or stripe of the pattern).

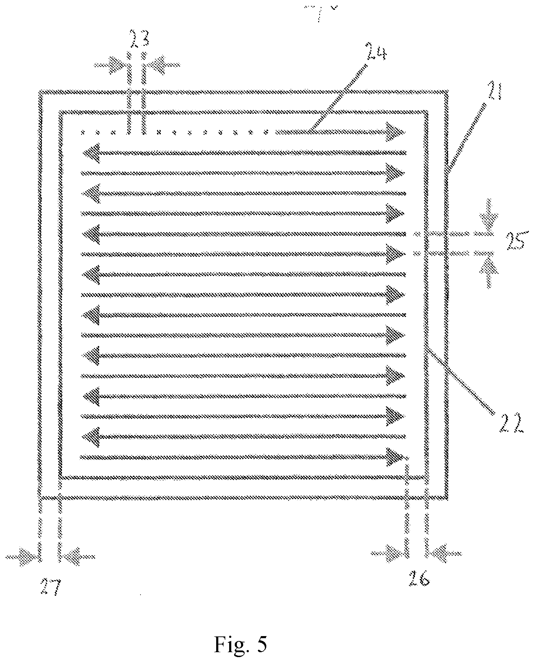

Scanning parameters used for scanning the joining region 304, 404 may be different to the parameters used to scan the separated portions 303a, 303b, 403a, 403b (or at least the scanning parameters used to scan parts of the separated portions that are located above unsolidified powder of the preceding layer). Referring to Figure 5, the scanning parameters may comprise one or more parameters selected from laser power, spot size, scanning speed, point distance 23 (a distance between each point of a hatch line 24) and exposure time (a time each point is exposed to the laser beam) (required in a discrete point scanning methodology, for example as used in Renishaw's AM250), hatch distance 25, spacing 26 provided between an end of the hatch lines 24 and the border 22 and spacing 27 between the border scans 21, 22, In particular, as the solidified material either side of the joining region 304, 404 will have cooled significantly relative to an amount comparable adjacent solidified material has cooled during the formation the separated areas 303a, 303b, 403a, 403b, the scanning parameters used for the solidifying the joining region may provide a higher energy density than those used for solidifying comparable areas of the separated regions.

A border scan may be completed after the separated portions 303a, 303b, 403a, 403b have been joined.

The scanning instructions determined by the build software are sent to and/or used by the computer 130 to control the powder bed fusion apparatus when building the workpiece.

It will be understood that alterations and modifications may be made to the above described embodiment without departing from the scope of the invention as defined in the claims. For example, the invention may be used on other additive manufacturing apparatus, such as stereolithography apparatus.

## Claims

1. A method of building a workpiece in an additive manufacturing process, in which the workpiece is built through layer-by-layer solidification of material, the method comprising, for a bridging layer (301c) in which an area (300e, 400d) to be solidified bridges material solidified as separate islands (300c, 300d; 400a, 400b) in an immediately preceding layer (301b), first, solidifying separated portions (303a, 303b, 403a, 403b) of the area (300e, 400d), each separated portion (303a, 303b, 403a, 403b) connected with a different one of the islands (300c, 300d; 400a, 400b) of the preceding layer (301b), and then solidifying material between the separated portions (303a, 303b, 403a, 403b) to join the separated portions (303a, 303b, 403a, 403b) together.

2. A method according to claim 1, wherein the material between the separated portions (303a, 303b, 403a, 403b) that is solidified to join the separated portions (303a, 303b, 403a, 403b) together is located above unsolidified material of the immediately preceding layer (301b).

3. A method according to claim 1 or claim 2, comprising delaying joining of the separated portions (303a, 303b, 403a, 403b) to allow time for the solidified separated portions (303a, 303b, 403a, 403b) to shrink.

4. A method according to claim 3, wherein the delay is by a predetermined time.

5. A method according to claim 4, wherein the predetermined time is determined based upon a geometry of the area (300e, 400d) to be solidified, wherein the predetermined time may be determined based upon a cross-sectional area of one or each of the separated portions (303a, 303b, 403a, 403b) to be joined, wherein the predetermined time may be based upon the cross-sectional area of the separated portion (303a, 303b, 403a, 403b) having the largest cross-sectional area.

6. A method according to claim 4 or claim 5, wherein the predetermined time is based upon a type of material being solidified; and/or wherein the method comprises determining a time per unit area for a type of material being solidified and determine the predetermined time from the identified time per unit area and the cross-section of the relevant separated portion(s) (303a, 303b, 403a, 403b).

7. A method according to any one of the preceding claims, wherein a joining region (304, 404) formed by solidifying the material between the separated portions (303a, 303b, 403a, 403b) to join the separated portions (303a, 303b, 403a, 403b) has a mid-line that is equidistant from the islands (300c, 300d; 400a, 400b) of the immediately preceding layer (301b), wherein a width of the joining region (304, 404) either side of the mid-line may be constant.

8. A method according to any one of the preceding claims, wherein a joining region (304, 404) formed by solidifying the material between the separated portions (303a, 303b, 403a, 403b) to join the separated portions (303a, 303b, 403a, 403b) has a width of the order of ones or tens of spot widths (1/e²) of the energy beam, wherein the width of the joining region (304, 404) may be less than 10 spot widths.

9. A method according to any one of the preceding claims, wherein the separated portions (303a, 303b, 403a, 403b) are substantially larger in cross-sectional area than a joining region (304, 404) formed by solidifying the material between the separated portions (303a, 303b, 403a, 403b) to join the separated portions (303a, 303b, 403a, 403b).

10. A method according to any one of the preceding claims, wherein the separated portions (303a, 303b, 403a, 403b) are joined only after substantial completion of an island of the bridging layer (301c) that includes the separated portions (303a, 303b, 403a, 403b).

11. A method according to any one of the preceding claims, wherein the area to be solidified comprises three or more adjacent separated portions, the method comprising joining the adjacent separated portions having the smallest cross-sections first before joining the separated portion(s) having larger cross-sectional areas.

12. A method according to any one of the preceding claims, wherein a scanning strategy used for solidifying the material between the separated portions (303a, 303b, 403a, 403b) is the same or different to a scanning strategy used to solidify the separated portions (303a, 303b, 403a, 403b).

13. A method according to any one of the preceding claims, wherein locations scanned by the energy beam to solidify material of the joining region (304, 404) overlap with locations scanned by the energy beam to solidify the separated portions (303a, 303b, 403a, 403b) to be joined.

14. A method according to any one of the preceding claims, comprising solidifying one or more consecutive layers immediately following the bridging layer (301c) by solidifying an area that bridges material solidified as separate islands (300c, 300d; 400a, 400b) in the layer (301b) immediately preceding the bridging layer (301c) by, first, solidifying separated portions of the area, each separated portion formed above a different one of the islands (300c, 300d; 400a, 400b) of the preceding layer (301b), and then solidifying material between the separated portions to join the separated portions together.

15. An additive manufacturing apparatus for building a workpiece through layer-by-layer solidification of material, the apparatus comprising a radiation source (105, 106) for generating an energy beam (118) for solidifying selected areas of material layers, and a controller (130) for controlling the radiation source (105, 106) such that, for a bridging layer (301c) in which an area (300e, 400d) to be solidified bridges material solidified as separate islands (300c, 300d; 400a, 400b) in an immediately preceding layer (301c), the radiation source (105, 106), first, solidifies separated portions (303a, 303b, 403a, 403b) of the area (300e, 400d), each separated portion (303a, 303b, 403a, 403b) connected with a different one of the islands (300c, 300d; 400a, 400b) of the preceding layer (301c), and then solidifies material between the separated portions (303a, 303b, 403a, 403b) to join the separated portions together (303a, 303b, 403a, 403b).

## Patentansprüche

1. Verfahren zum Aufbauen eines Werkstücks in einem additiven Herstellungsprozess, bei dem das Werkstück durch schichtweise Verfestigung von Material aufgebaut wird, wobei das Verfahren für eine Überbrückungsschicht (301c), in der eine zu verfestigende Fläche (300e, 400d) Material überbrückt, das als getrennte Inseln (300c, 300d, 400a, 400b) in einer unmittelbar vorhergehenden Schicht (301b) verfestigt wird, zunächst das Verfestigen getrennter Abschnitte (303a, 303b, 403a, 403b) der Fläche (300e, 400d) umfasst, wobei jeder getrennte Abschnitt (303a, 303b, 403a, 403b) mit einer anderen der Inseln (300c, 300d, 400a, 400b) der vorhergehenden Schicht (301b) verbunden wird, und dann Verfestigen des Materials zwischen den getrennten Abschnitten (303a, 303b, 403a, 403b), um die getrennten Abschnitte (303a, 303b, 403a, 403b) miteinander zu verbinden.

2. Verfahren nach Anspruch 1, wobei das Material zwischen den getrennten Abschnitten (303a, 303b, 403a, 403b), das verfestigt wird, um die getrennten Abschnitte (303a, 303b, 403a, 403b) miteinander zu verbinden, sich über nicht verfestigtem Material der unmittelbar vorhergehenden Schicht (301b) befindet.

3. Verfahren nach Anspruch 1 oder 2, umfassend das Verzögern des Verbindens der getrennten Abschnitte (303a, 303b, 403a, 403b), um den verfestigten getrennten Abschnitten (303a, 303b, 403a, 403b) Zeit zum Schrumpfen zu geben.

4. Verfahren nach Anspruch 3, bei dem die Verzögerung eine vorbestimmte Zeit beträgt.

5. Verfahren nach Anspruch 4, wobei die vorbestimmte Zeit auf der Grundlage einer Geometrie der zu verfestigenden Fläche (300e, 400d) bestimmt wird, wobei die vorbestimmte Zeit auf der Grundlage einer Querschnittsfläche von einem oder jedem der zu verbindenden getrennten Abschnitte (303a, 303b, 403a, 403b) bestimmt werden kann, wobei die vorbestimmte Zeit auf der Querschnittsfläche des getrennten Abschnitts (303a, 303b, 403a, 403b) mit der größten Querschnittsfläche basieren kann.

6. Verfahren nach Anspruch 4 oder 5, wobei die vorbestimmte Zeit auf einer Art von Material basiert, das verfestigt wird, und/oder wobei das Verfahren das Bestimmen einer Zeit pro Flächeneinheit für eine Art von Material, das verfestigt wird, und das Bestimmen der vorbestimmten Zeit aus der identifizierten Zeit pro Flächeneinheit und dem Querschnitt des relevanten getrennten Abschnitts / der relevanten getrennten Abschnitte (303a, 303b, 403a, 403b) umfasst.

7. Verfahren nach einem der vorhergehenden Ansprüche, wobei ein Verbindungsbereich (304, 404), der durch Verfestigen des Materials zwischen den getrennten Abschnitten (303a, 303b, 403a, 403b) gebildet wird, um die getrennten Abschnitte (303a, 303b, 403a, 403b) zu verbinden, eine Mittellinie aufweist, die von den Inseln (300c, 300d, 400a, 400b) der unmittelbar vorhergehenden Schicht (301b) gleich weit entfernt ist, wobei eine Breite des Verbindungsbereichs (304, 404) beiderseits der Mittellinie konstant sein kann.

8. Verfahren nach einem der vorhergehenden Ansprüche, wobei ein Verbindungsbereich (304, 404), der durch Verfestigen des Materials zwischen den getrennten Abschnitten (303a, 303b, 403a, 403b) gebildet wird, um die getrennten Abschnitte (303a, 303b, 403a, 403b) zu verbinden, eine Breite in der Größenordnung von einer oder zehn Punktbreiten (1/e²) des Energiestrahls aufweist, wobei die Breite des Verbindungsbereichs (304, 404) weniger als 10 Punktbreiten betragen kann.

9. Verfahren nach einem der vorhergehenden Ansprüche, wobei die getrennten Abschnitte (303a, 303b, 403a, 403b) in der Querschnittsfläche wesentlich größer sind als ein Verbindungsbereich (304, 404), der durch Verfestigen des Materials zwischen den getrennten Abschnitten (303a, 303b, 403a, 403b), um die getrennten Abschnitte (303a, 303b, 403a, 403b) zu verbinden, gebildet wird.

10. Verfahren nach einem der vorhergehenden Ansprüche, wobei die getrennten Abschnitte (303a, 303b, 403a, 403b) erst nach der wesentlichen Fertigstellung einer Insel der Überbrückungsschicht (301c), die die getrennten Abschnitte (303a, 303b, 403a, 403b) enthält, verbunden werden.

11. Verfahren nach einem der vorhergehenden Ansprüche, wobei die zu verfestigende Fläche drei oder mehr benachbarte getrennte Abschnitte umfasst, wobei das Verfahren zunächst das Verbinden der benachbarten getrennten Abschnitte mit den kleinsten Querschnitten umfasst, bevor der getrennte Abschnitt / die getrennten Abschnitte mit größeren Querschnittsflächen verbunden werden.

12. Verfahren nach einem der vorhergehenden Ansprüche, wobei eine Abtaststrategie, die zum Verfestigen des Materials zwischen den getrennten Abschnitten (303a, 303b, 403a, 403b) verwendet wird, die gleiche oder eine andere ist als eine Abtaststrategie, die zum Verfestigen der getrennten Abschnitte (303a, 303b, 403a, 403b) verwendet wird.

13. Verfahren nach einem der vorhergehenden Ansprüche, wobei Stellen, die durch den Energiestrahl zur Verfestigung von Material des Verbindungsbereichs (304, 404) abgetastet werden, Stellen überlappen, die durch den Energiestrahl zur Verfestigung der getrennten, zu verbindenden Abschnitte (303a, 303b, 403a, 403b) abgetastet werden.

14. Verfahren nach einem der vorhergehenden Ansprüche, umfassend das Verfestigen einer oder mehrerer aufeinanderfolgender Schichten unmittelbar nach der Überbrückungsschicht (301c) durch Verfestigen einer Fläche, die Material überbrückt, das als getrennte Inseln (300c, 300d; 400a, 400b) in der Schicht (301b) unmittelbar vor der Überbrückungsschicht (301c) verfestigt wurde, indem zuerst getrennte Abschnitte der Fläche verfestigt werden, wobei jeder getrennte Abschnitt über einer anderen der Inseln (300c, 300d, 400a, 400b) der vorhergehenden Schicht (301b) gebildet wird, und dann das Verfestigten von Material zwischen den getrennten Abschnitten, um die getrennten Abschnitte miteinander zu verbinden.

15. Additive Herstellungsvorrichtung zum Aufbauen eines Werkstücks durch schichtweises Verfestigen von Material, wobei die Vorrichtung eine Strahlungsquelle (105, 106) zum Erzeugen eines Energiestrahls (118) zum Verfestigen ausgewählter Flächen von Materialschichten und einen Controller (130) zum Steuern der Strahlungsquelle (105, 106) umfasst, so dass für eine Überbrückungsschicht (301c), in der eine zu verfestigende Fläche (300e, 400d) Material überbrückt, das als separate Inseln (300c, 300d, 400a, 400b) in einer unmittelbar vorhergehenden Schicht (301c) verfestigt worden ist, die Strahlungsquelle (105, 106) zunächst die getrennten Abschnitte (303a, 303b, 403a, 403b) der Fläche (300e, 400d) verfestigt, jeder getrennte Abschnitt (303a, 303b, 403a, 403b) mit einer anderen der Inseln (300c, 300d, 400a, 400b) der vorhergehenden Schicht (301c) verbunden wird, und dann das Material zwischen den getrennten Abschnitten (303a, 303b, 403a, 403b) verfestigt wird, um die getrennten Abschnitte (303a, 303b, 403a, 403b) miteinander zu verbinden.

## Revendications

1. Procédé de construction d'une pièce dans un processus de fabrication additive, dans lequel la pièce est construite par solidification couche par couche de matériau, le procédé comprenant le fait, pour une couche de pontage (301c) dans laquelle une surface (300e, 400d) à solidifier forme un pont pour un matériau solidifié sous forme d'îlots séparés (300c, 300d ; 400a, 400b) dans une couche immédiatement précédente (301b), de solidifier, d'abord, des parties séparées (303a, 303b, 403a, 403b) de la surface (300e, 400d), chaque partie séparée (303a, 303b, 403a, 403b) étant reliée à un îlot différent des îlots (300c, 300d ; 400a, 400b) de la couche précédente (301b), puis de solidifier le matériau entre les parties séparées (303a, 303b, 403a, 403b) pour joindre les parties séparées (303a, 303b, 403a, 403b) ensemble.

2. Procédé selon la revendication 1, dans lequel le matériau entre les parties séparées (303a, 303b, 403a, 403b) qui est solidifié pour joindre les parties séparées (303a, 303b, 403a, 403b) ensemble est situé au-dessus du matériau non solidifié de la couche immédiatement précédente (301b).

3. Procédé selon la revendication 1 ou 2, comprenant le fait de reporter la jonction des parties séparées (303a, 303b, 403a, 403b) pour prévoir le temps nécessaire au rétrécissement des parties séparées solidifiées (303a, 303b, 403a, 403b).

4. Procédé selon la revendication 3, dans lequel le report est d'un temps prédéterminé.

5. Procédé selon la revendication 4, dans lequel le temps prédéterminé est déterminé sur la base d'une géométrie de la surface (300e, 400d) à solidifier, dans lequel le temps prédéterminé peut être déterminé sur la base d'une surface en coupe transversale de l'une ou de chacune des parties séparées (303a, 303b, 403a, 403b) à joindre, où le temps prédéterminé peut être basé sur la surface en coupe transversale de la partie séparée (303a, 303b, 403a, 403b) ayant la plus grande surface en coupe transversale.

6. Procédé selon la revendication 4 ou 5, dans lequel le temps prédéterminé est basé sur un type de matériau en cours de solidification ; et/ou lequel procédé comprend la détermination d'un temps par unité de surface pour un type de matériau en cours de solidification et la détermination du temps prédéterminé à partir du temps par unité de surface identifié et de la coupe transversale de la au moins une partie séparée pertinente (303a, 303b, 403a, 403b).

7. Procédé selon l'une quelconque des revendications précédentes, dans lequel une région de jonction (304, 404) formée en solidifiant le matériau entre les parties séparées (303a, 303b, 403a, 403b) pour joindre les parties séparées (303a, 303b, 403a, 403b) a une ligne médiane qui est équidistante des îlots (300c, 300d ; 400a, 400b) de la couche immédiatement précédente (301b), où une largeur de la région de jonction (304, 404) de chaque côté de la ligne médiane peut être constante.

8. Procédé selon l'une quelconque des revendications précédentes, dans lequel une région de jonction (304, 404) formée en solidifiant le matériau entre les parties séparées (303a, 303b, 403a, 403b) pour joindre les parties séparées (303a, 303b, 403a, 403b) a une largeur de l'ordre de quelques ou de dizaines de largeurs de point (1/e²) du faisceau d'énergie, où la largeur de la région de jonction (304, 404) peut être inférieure à 10 largeurs de point.

9. Procédé selon l'une quelconque des revendications précédentes, dans lequel les parties séparées (303a, 303b, 403a, 403b) présentent une surface en coupe transversale sensiblement plus grande que celle d'une région de jonction (304, 404) formée en solidifiant le matériau entre les parties séparées (303a, 303b, 403a, 403b) pour joindre les parties séparées (303a, 303b, 403a, 403b).

10. Procédé selon l'une quelconque des revendications précédentes, dans lequel les parties séparées (303a, 303b, 403a, 403b) ne sont jointes qu'après la finalisation substantielle d'un îlot de la couche de pontage (301c) qui comporte les parties séparées (303a, 303b, 403a, 403b).

11. Procédé selon l'une quelconque des revendications précédentes, dans lequel la surface à solidifier comprend trois parties séparées adjacentes ou plus, le procédé comprenant la jonction des parties séparées adjacentes ayant les plus petites coupes transversales avant de joindre la au moins une partie séparée ayant des coupes transversales plus grandes.

12. Procédé selon l'une quelconque des revendications précédentes, dans lequel une stratégie de balayage utilisée pour solidifier le matériau entre les parties séparées (303 a, 303b, 403a, 403b) est identique à ou différente d'une stratégie de balayage utilisée pour solidifier les parties séparées (303a, 303b, 403a, 403b).

13. Procédé selon l'une quelconque des revendications précédentes, dans lequel les emplacements balayés par le faisceau d'énergie pour solidifier le matériau de la région de jonction (304, 404) se chevauchent avec des emplacements balayés par le faisceau d'énergie pour solidifier les parties séparées (303a, 303b, 403a, 403b) à joindre.

14. Procédé selon l'une quelconque des revendications précédentes, comprenant la solidification d'au moins une couche consécutive immédiatement après la couche de pontage (301c) en solidifiant une surface qui forme un pont pour un matériau solidifié sous forme d'îlots séparés (300c, 300d ; 400a, 400b) dans le couche (301b) qui précède immédiatement la couche de pontage (301c) en solidifiant tout d'abord des parties séparées de la surface, chaque partie séparée étant formée au-dessus d'un îlot différent des îlots (300c, 300d ; 400a, 400b) de la couche précédente (301b), puis en solidifiant le matériau entre les parties séparées pour joindre les parties séparées ensemble.

15. Appareil de fabrication additive pour construire une pièce par solidification couche par couche de matériau, l'appareil comprenant une source de rayonnement (105, 106) pour générer un faisceau d'énergie (118) pour solidifier des surfaces sélectionnées de couches de matériau, et un dispositif de commande (130) pour commander la source de rayonnement (105, 106) de sorte que, pour une couche de pontage (301c) dans laquelle une surface (300e, 400d) à solidifier forme un pont pour le matériau solidifié sous forme d'îlots séparés (300c, 300d ; 400a, 400b) dans une couche immédiatement précédente (301c), la source de rayonnement (105, 106) solidifie, tout d'abord, les parties séparées (303a, 303b, 403a, 403b) de la surface (300e, 400d), chaque partie séparée (303a, 303b, 403a, 403b) étant reliée à un îlot différent des îlots (300c, 300d ; 400a, 400b) de la couche précédente (301c), puis solidifie le matériau entre les parties séparées (303a, 303b, 403a, 403b) pour joindre les parties séparées ensemble (303a, 303b, 403a, 403b).
